# EUROPEAN PATENT SPECIFICATION

(11) **EP 3 592 963 B1**
(45) Date of publication and mention of the grant of the patent: **12.05.2021**
(21) Application number: 18708487.6
(22) Date of filing: 19.02.2018
(51) Int. Cl.: F02G 1/043, F02G 3/02, F04B 35/00, F01B 11/00, F25B 1/00, F24F 5/00, F02B 63/04

(54) **THERMODYNAMIC ENGINE**
THERMODYNAMISCHE MASCHINE
MACHINE MOTRICE THERMODYNAMIQUE

(30) Priority: 07.03.2017 IT 201700025301
(43) Date of publication of application: 15.01.2020
(73) Proprietor: Nova Somor S.r.l., 97100 Ragusa (RG) (IT)
(72) Inventor: BELARDINELLI, Roberto, 47921 Rimini (IT); MANCINI, Giordano, 60010 Ostra (AN) (IT); DI MAIUTA, Alessandro, 96015 Francofonte (SR) (IT)
(74) Representative: Gregorj S.r.l.
(86) International application number: PCT/IB2018/051006
(87) International publication number: WO 2018/163000

(56) References cited:
- WO-A1-2012/107480
- GB-A- 2 469 279
- GB-A- 2 480 461
- US-A- 3 711 224
- US-A- 4 266 404

## Description

### Technical field of the invention

The present invention refers to a thermodynamic motor, in other words to a motor which obtains the energy for the operation thereof by a temperature differential between two heat sources. Such thermodynamic motor can find for example an application when is coupled to: systems for pumping water from the underground; systems for pumping any fluid; linear current generators, or other applications which are capable of advantageously use the reciprocal linear movement.

### Prior art

The thermodynamic motors are known in the art. The known thermodynamic motors use a power thermodynamic cycle which withdraws the energy from a temperature differential between a hot thermal source and a cold thermal source and converts it into mechanical energy for moving a motor. The motor usually consists of a turbine or a piston actuating a rod-crank mechanism.

Unfortunately, such known systems do not generally enable to obtain sufficiently high efficiencies.

Moreover, such known thermodynamic motors are hardly adaptable to contingent needs, particularly it is difficult to modify strokes and bores and consequently flow rates and pressures in order to obtain different flow rates and efficiencies.

In addition, such known thermodynamic motors are generally structurally complex, therefore expensive both to manufacture and to service.

US 4 266 404 A discloses a thermodynamic motor with a power piston in a power cylinder, a condenser and an evaporator.

### Brief summary of the invention

Consequently, an object of the present invention consists of making available a thermodynamic motor capable of overcoming at least partially the problems discussed with reference to the prior art.

Particularly, an object of the present invention consists of making available a thermodynamic motor alternative to the known ones, enabling to obtain high efficiencies and a greater versatility in terms of flow rates and pressures and therefore in terms of generated useful power, besides an adequate manufacturing simplicity.

This and other objects are met by a thermodynamic motor according to claim 1.

### Brief description of the drawings

For a better comprehension and for appreciating the advantages of this invention, some exemplifying non-restrictive embodiments thereof will be described in the following with reference to the attached figures, wherein:
Figure 1 is a schematic illustration of a thermodynamic circuit of a thermodynamic motor according to a possible embodiment;
Figure 2 is a perspective partially exploded view of a thermodynamic motor according to an embodiment of the invention;
Figure 3 is a cross-section view of a detail of the thermodynamic motor of Figure 2.

### Detailed description of the invention

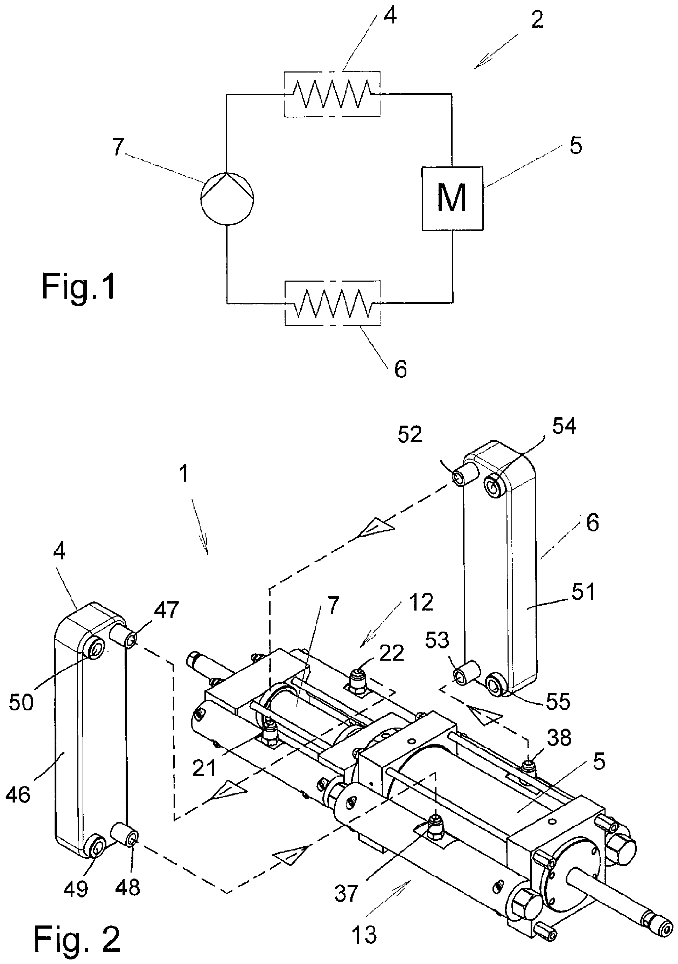

Referring to the figures, reference 1 generally indicates a thermodynamic motor. The thermodynamic motor 1 is for example destined to be coupled to systems for pumping water or any fluids, or to systems of other type exploiting a reciprocating motion, such as for example linear current generators. With reference to fluid pumping, the thermodynamic motor 1 can particularly be used for extracting water, for example, from the underground, and for then distributing it. The thermodynamic motor 1 exploits the thermal energy which is then converted into mechanical energy. In order to convert the thermal energy into mechanical energy, the thermodynamic motor 1 comprises a thermodynamic cycle 2, schematically shown in Figure 1, which operates a thermodynamic cycle used for actuating it.

With reference to Figure 1, the thermodynamic circuit 2 preferably implements a thermodynamic cycle using a working fluid capable of vaporizing at low temperatures (particularly at temperatures less than the vaporization temperature of the water). The thermodynamic circuit 2 comprises an evaporator 4, a motor 5, a condenser 6 and a compressor 7 for the working fluid.

In the evaporator 4 the thermodynamic circuit 2 receives energy as heat from a hot thermal source (for example, the hot thermal source can comprise solar thermal panels, biomass water heaters or any source capable of providing heat), such energy is then conveyed from the hot source to the evaporator 4 by means of a first hot thermal carrier fluid, consequently the working fluid, at the liquid state at the inlet of the evaporator 4, evaporates by increasing the temperature and then the pressure. Preferably, the evaporator 4 comprises a thermal exchanger transferring the heat of the first hot thermal carrier fluid, from the hot thermal source, to the working fluid of the thermodynamic circuit 2. In the motor 5 the evaporated working fluid releases part of the energy thereof, which is then converted into mechanical energy by actuating the motor 5 cylinder itself. As it will be explained in the following, the motor 5 is comprised of of a cylinder-plunger group, which in this way is actuated according to a reciprocating linear motion, which can be always held active both along the forward stroke and idle stroke. In the condenser 6 the working fluid exiting the motor 5 releases heat, by cooling down and decreasing the pressure and temperature thereof, and it returns to the liquid state. The condenser 6 comprises a thermal exchanger releasing the heat of the working fluid to a second cool thermal carrier fluid from a cool thermal source (for example a well, a canal, a basin, or any other cooling source having a temperature less than the one of the working fluid). Lastly, the working fluid at the liquid state exiting the condenser 6 arrives to the compressor 7 which conveys again the working fluid to the evaporator 4. The compressor 7 is comprised of a further cylinder-plunger group, actuated by the cylinder-plunger group forming the motor 5. This aspect will be also explained in the following.

Referring now to Figures from 2 to 3, the thermodynamic motor 1 comprises a first 12 and second cylinder-plunger groups 13 preferably aligned to each other. Each of said cylinder-plunger groups comprises a respective cylinder, the interior thereof receives a respective plunger movable according to a linear reciprocating motion, such plunger defines two volume-varying chambers. Advantageously, the thermodynamic motor 1 comprises a common stem 15, made in a single piece or in plural pieces integrally connected to each other, which are associated to the plungers of the cylinder-plunger group 12 and 13, which therefore are at least translatingly integral to each other and synchronously move according to a linear reciprocating motion.

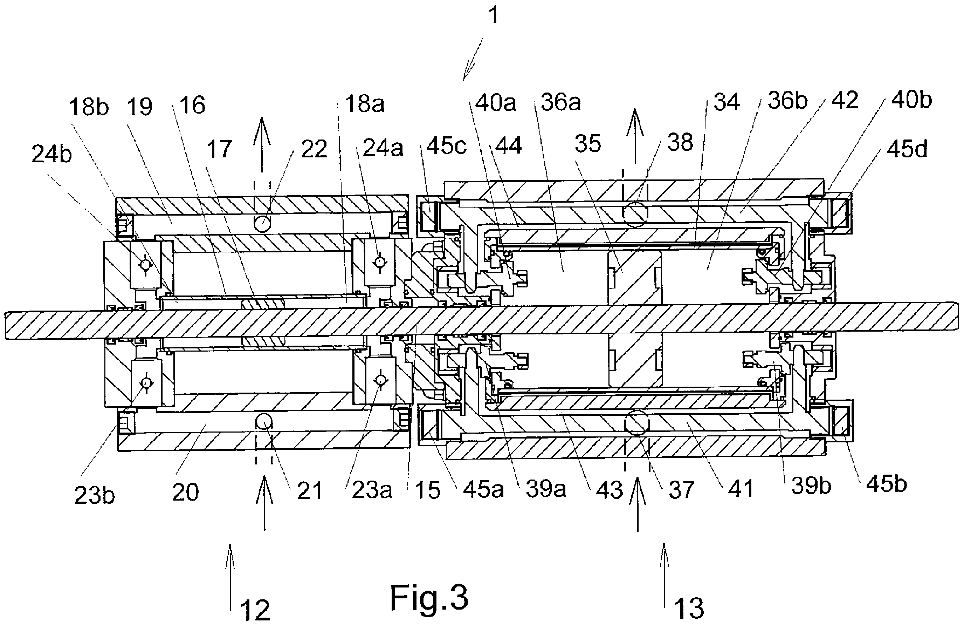

With reference to Figure 3, the cylinder-plunger groups 12 and 13 will be specifically described now.

The first cylinder-plunger group 12 implements the previously described compressor 7 of the thermodynamic circuit 2 having the function of pumping the working fluid, at the liquid state, towards the evaporator 4. The first cylinder-plunger group 12 comprises a first cylinder 16, the interior thereof receives a respective first plunger 17 movable according to a reciprocating linear motion, such plunger defines two volume-varying chambers 18a and 18b. Obviously, the volumes of the chambers 18a and 18b change as the position of the plunger 17 changes inside the cylinder 16. The motion of the plunger 17 is maintained by the second cylinder-plunger group 13 implementing the motor 5 and which acts as a motive power, as it will be described in the following.

The first cylinder-plunger group 12 comprises an inlet 21 and an outlet 22 for the working fluid, inside the chambers 18a and 18b. The chambers 18a and 18b can be connected to the inlet 21 and outlet 22 respectively by a suctioning conduit 20 and by a discharging conduit 19. The first cylinder-plunger group 12 comprises at least one first pair of one-way valves 23a - 23b associated, by the suctioning conduit 20 - to the inlet 21, and a second pair 24a - 24b of one-way valves associated, by the discharging conduit 19, to the outlet 22. The one-way valves 23a and 23b are configured for enabling the flow of the working fluid respectively entering the chambers 18a and 18b, but they do not enable the flow in the opposite direction. In the same way, the one-way valves 24a and 24b are configured for enabling the flow of the working fluid exiting respectively the chambers 18a and 18b, but do not enable the flow in the opposite direction.

Due to the reciprocating motion of the plunger 17, when it moves according to a first direction (from left to right, with reference to Figure 3), the working fluid from the suctioning conduit 20 is suctioned into the chamber 18b, without any obstruction from the one-way valve 23b, which is opened due to the negative pressure generated by the plunger 17. On the contrary, the one-way valve 24b prevents the working fluid from exiting towards the discharging conduit 19, since the valve is closed by the same negative pressure, in the chamber 18b. Simultaneously, the working fluid in the chamber 18a is thrusted towards the discharging conduit 19 and then towards the outlet 22 through the one-way valve 24a which is open due to the pressure generated by the plunger 17. The one-way valve 23a prevents the working fluid from exiting towards the suctioning conduit 20, since is held closed by the same pressure of the chamber 18a.

When the plunger 17 moves in the opposite direction (from right to left in Figure 3), the working fluid is pressurized in the chamber 18b and exits through the one-way valve 24b towards the discharging conduit 19 and then towards the outlet 22. On the contrary, the one-way valve 23b is held closed due to the fluid pressure. Simultaneously, the working fluid from the suctioning conduit 20 is suctioned into the chamber 18a, since it is not obstructed by the one-way valve 23a, which is opened due to the negative pressure generated by the plunger 17. On the contrary, the one-way valve 24a prevents the working fluid from exiting towards the discharging conduit 19, since is held closed by the same negative pressure of the chamber 18a.

With reference to the second cylinder-plunger group 13, it implements the motor 5, in other words implements the motive power of the thermodynamic motor and converts the thermal energy of the working fluid into mechanical energy. The second cylinder-plunger group 13 comprises a second cylinder 34, the interior thereof receives a respective second plunger 35 movable according to a linear reciprocating motion, such plunger defines two volume-varying chambers 36a and 36b. Obviously, the volumes of the two chambers 36a and 36b change as the position of the plunger 35 changes inside the cylinder 34.

The second cylinder-plunger group 13 comprises an inlet 37 and outlet 38 for the working fluid of the thermodynamic circuit 2, at the gas state, inside the chambers 36a and 36b. The chambers 36a and 36b can be connected to the inlet 37 and outlet 38 respectively by a loading conduit 43 and discharging conduit 44.

The second cylinder-plunger group 13 comprises a pair of loading valves 39a and 39b associated, by the loading conduit 43, to the inlet 37, and a pair of discharging valves 40a and 40b associated, by the discharging conduit 44, to the outlet 38.

The loading valve 39a and discharging valve 40a are disposed at the chamber 36a. The loading valve 39b and discharging valve 40b are disposed at the chamber 36b.

The loading valves 39a and 39b and discharging valves 40a and 40b are configured for causing the working fluid to alternatively enter the chambers 36a and 36b and exchange energy with the plunger 35, so that this latter performs a reciprocating linear motion, in order to move, by means of the common stem 15, also the plunger 17 of the first cylinder-plunger group 12. Specifically, they are configured so that:
- when the loading valve 39a is open, the second loading valve 39b is closed, and viceversa. So, the mechanical thrust of the working fluid arrives only to just one side of the plunger 35, in other words the fluid alternatively enters the first chamber 36a or second chamber 36b;
- when the discharging valve 40a is open, the discharging valve 40b is closed, and viceversa. Analogously, this causes the fluid remaining in one of the two chambers 36a or 36b to be discharged when the working fluid enters the opposite chamber, without countering the reciprocating motion of the plunger 35.

According to a possible embodiment, in order to ensure the above cited operation of the loading and discharging valves, the first loading valve 39a is connected to the second loading valve 39b by one or more transmission rods 41. Analogously, the first discharging valve 40a is connected to the second discharging valve 40b by one or more further transmission rods 42.

Advantageously, the plunger 35 is configured for commanding the opening and closure of the pairs of loading valves 39a and 39b and of the discharging valves 40a and 40b when the final points of the stroke thereof are reached inside the chambers 36a and 36b.

With reference to the embodiment shown in Figure 3, the plunger 35 is particularly movable between two stop positions:
- first position: corresponding to a condition of minimum volume of the chamber 36a and of a maximum volume of the chamber 36b (the plunger 35 is placed at the left end point in Figure 3);
- second position: corresponding to a condition of maximum volume of the chamber 36a and of minimum volume of the chamber 36b (the plunger 35 is placed in the right end point in Figure 3).

Specifically, the plunger 35 is configured for interacting with the pairs of loading and discharging valves, so that, when the plunger moves to the first position, the loading valve 39a is open and the discharging valve 40a is closed. Connecting the pairs of loading and discharging valves by the above cited transmission rods 41 and 42, determines the closure of the second loading valve 39b and opening of the second discharging valve 40b.

In the same way, when the plunger 35 moves to the second position, the loading valve 39b is open and the discharging valve 40b is closed. This determines the closure of the loading valve 39a and opening of the discharging valve 40a.

The above cited interaction between the plunger 35 and the pairs of loading 39a-39b and discharging valves 40a-40b is preferably implemented by a direct contact between them when the plunger 35 arrives to the end stop positions thereof inside the two chambers 36a and 36b, corresponding to the first position and second position as previously defined.

Due to the above described arrangement, the plunger 35 performs a linear reciprocating motion due to the energy withdrawn from the working fluid and, by the common stem 15, causes the plunger 17 of the first cylinder-plunger group 12 to reciprocally move, so that it can pump the working fluid into the thermodynamic circuit 2.

According to an embodiment, the thermodynamic motor is provided with suitable means adapted to cause the transmission rods and therefore the pairs of valves connected to them, to be held in the right end position or in the left end position in case of a sudden stop of the same, in other words for preventing the transmission rods to take any intermediate position corresponding to a simultaneous opening of the loading and discharging valves, causing a stalling condition of the motor. For example, at the right and left ends of each of the two transmission rods 41 and 42 are provided suitable magnetic means 45a, 45b, 45c and 45d adapted to attract the transmission rods to the nearest position between the right end position and left end position.

According to an embodiment, the evaporator 4 comprises a thermal exchanger 46 connectable to the outlet 22 of the first cylinder-plunger group 12 and to the inlet 37 of the second cylinder-plunger group 13, in order to establish a thermal exchange relationship between the working fluid and the first hot thermal carrier fluid, which also flows through the thermal exchanger 46. The thermal exchanger 46 preferably comprises openings 47, 48 for a fluid connection to the outlet 22 of the first cylinder-plunger group 12 and to the inlet 37 of the second cylinder-plunger group 13. Moreover, the thermal exchanger 46 preferably comprises further openings 49, 50 for receiving and discharging the first hot thermal carrier fluid.

Analogously, the condenser 6 comprises a thermal exchanger 51 connectable to the inlet 21 of the first cylinder-plunger group 12 and to the outlet 38 of the second cylinder-plunger group 13, in order to establish a thermal exchange relationship between the working fluid and the second thermal carrier fluid, which flows also through the thermal exchanger 51. The thermal exchanger 51 preferably comprises openings 52, 53 for a fluid connection to the inlet 21 of the first cylinder-plunger group 12 and to the outlet 38 of the second cylinder-plunger group 13. Moreover, the thermal exchanger 51 preferably comprises further openings 54, 55 for receiving and discharging the second cool thermal carrier fluid.

It is observed that by the evaporator 4 adapted to withdraw heat, it is possible to connect the thermodynamic circuit 2 to hot thermal sources of different types; for example, it is possible to withdraw heat from a biomass combustion or by the solar irradiation, or by any other heat source.

Moreover, it is observed that by the condenser 6 adapted to release heat, it is possible to connect the thermodynamic circuit 2 to cool thermal sources of different types; for example, it is possible to release heat to a cool water source such as well, a canal, a basin, or any other cooling sources.

Preferably, it is further observed that to the stem 15 can be in-line connected, for example, further cylinder-plunger systems implementing circulators for the above cited cool and/or hot thermal carrier fluids, for determining an automatic withdrawal from the available energy sources.

The thermodynamic motor according to the invention has several advantages.

The efficient synchronous system formed by coupling the transmission rods 41-42 to the respective pairs of valves 39a-39b and 40a-40b of the cylinder-plunger group 2 enables the thermodynamic motor, object of the present invention, to actively exploit both the motion directions, for generating a thrusting work useable in both the motion reciprocating directions, in other words for implementing a double-acting propulsion. This characteristic is absent for example in the cylinder of a standard combustion engine, wherein the useful thrusting work on the plunger is generated in a single chamber by actively exploiting the plunger just along one motion direction. Therefore, it is obtained a single-effect propulsion.

Further, it is observed that the simplicity in activating the above cited synchronism system does not require additional transmission elements but is performed by a simple direct contact of the plunger against the valves.

The use of the cylinders, which can be simply manufactured, makes the thermodynamic motor sufficiently economical. Moreover, the pressures and flow rates can be easily changed by simply modifying strokes and bores of the cylinder-plunger groups in the motor according to the invention.

The simplicity of the used components enables to manufacture a lightweight thermodynamic motor characterized by a small-size, simple structure and consequently by an easy maintenance.

Moreover, the efficiency ensured by the double-acting cylinders is generally high and consequently is also high the efficiency of the thermodynamic motor.

To the described embodiments of the thermodynamic motor, a person skilled in the art, in order to meet specific contingent needs, could make several additions, modifications, or substitutions of elements with other operatively equivalent, without falling out of the scope of the attached claims.

## Claims

1. Thermodynamic motor (1) comprising:
- a thermodynamic circuit (2) comprising a working fluid, said thermodynamic circuit (2) comprising an evaporator (4), a motor (5), a condenser (6) and a compressor (7), wherein the working fluid circulates in the sequence evaporator (4) - motor (5) - condenser (6) - compressor (7);
- a first cylinder-plunger group (12) with a first cylinder (16) and a first plunger (17), the thermodynamic motor (1) being **characterized by**
a second cylinder-plunger group (13) with a second cylinder (34) and a second plunger (35), wherein said first (17) and second plungers (35) are translatingly integral with each other by means of a common stem (15),
wherein:
- said first cylinder-plunger group (12) constitutes said compressor (7) of the thermodynamic circuit (2);
- said second cylinder-plunger group (13) constitutes said motor (5) of the thermodynamic circuit (2);
- said evaporator (4) comprises a first thermal exchanger (46) configured to put in a thermal exchange relationship said working fluid of the thermodynamic circuit (2) with a first hot thermal carrier fluid, which is in a thermal exchange relationship with a hot thermal source;
- said condenser (6) comprises a second thermal exchanger (51) configured to put in a thermal exchange relationship said working fluid of the thermodynamic circuit (2) with a second cold thermal carrier fluid, which is in a thermal exchange relationship with a cold thermal source.

2. Thermodynamic motor (1) according to claim 1, wherein said second cylinder (34) of the second cylinder-plunger group (13) delimits a second chamber (36), and said second plunger (35) is translatingly movable inside said second chamber (36) between a first position and a second position, and divides said second chamber (36) in a first (36a) and a second (36b) portions of the second chamber.

3. Thermodynamic motor (1) according to claim 2, wherein said second cylinder-plunger group (13) comprises an inlet (37) and an outlet (38) for the working fluid, a pair of inlet valves (39a, 39b) associated to the inlet (37) and a pair of discharge valves (40a, 40b) associated to the outlet (38), wherein the pair of inlet valves (39a, 39b) comprise a first inlet valve (39a) disposed at the first portion (36a) of the second chamber, and a second inlet valve (39b) disposed at the second portion (36b) of the second chamber, and the pair of discharge valves (40) comprise a first discharge valve (40a) disposed at the first portion (36a) of the second chamber and a second discharge valve (40b) disposed at the second portion (36b) of the second chamber, configured such that:
- when the first inlet valve (39a) is open, the second inlet valve (39b) is closed, and viceversa;
- when the first discharge valve (40a) is open, the second discharge valve (40b) is closed.

4. Thermodynamic motor (1) according to claim 3, wherein the first inlet valve (39a) is connected to the second inlet valve (39b) by one or more transmission rods (41), and the first discharge valve (40a) is connected to the second discharge valve (40b) by one or more further transmission rods (42).

5. Thermodynamic motor (1) according to claim 3 or 4, wherein said second plunger (35) is configured to command to open/close said pairs of inlet valves (39a, 39b) and discharge valves (40a, 40b) when said first and second positions inside the second chamber (36) are reached.

6. Thermodynamic motor (1) according to claim 5, wherein said second plunger (35) is configured to interact with said pairs of inlet valves (39a, 39b) and discharge valves (40a, 40b) so that, when the second plunger (35) moves to the first position, the first inlet valve (39a) is open and the first discharge valve (40a) is closed, and when the second plunger (35) moves to the second position, the second inlet valve (39b) is open and the second discharge valve (40b) is closed.

7. Thermodynamic motor (1) according to any of the preceding claims, wherein said first (17) and second plungers (35) of the first (12) and second cylinder-plunger groups (13) implement double-acting pistons having a linear reciprocating movement.

8. Thermodynamic motor (1) according to any of the preceding claims, wherein said first cylinder-plunger group (12) comprises an inlet (21) and outlet (22) for the working fluid, and one-way valves (23a, 23b, 24a, 24b) associated to said inlet (21) and outlet (22).

## Patentansprüche

1. Thermodynamischer Motor (1), umfassend:
- einen thermodynamischen Kreislauf (2), der ein Arbeitsfluid umfasst, wobei der thermodynamische Kreislauf (2) einen Verdampfer (4), einen Motor (5), einen Kondensator (6) und einen Kompressor (7) umfasst, wobei das Arbeitsfluid in der Reihenfolge Verdampfer (4) - Motor (5) - Kondensator (6) - Kompressor (7) zirkuliert;
- eine erste Zylinder-Kolben-Gruppe (12) mit einem ersten Zylinder (16) und einem ersten Kolben (17), wobei der thermodynamische Motor (1) durch eine zweite Zylinder-Kolben-Gruppe (13) mit einem zweiten Zylinder (34) und einem zweiten Kolben (35) gekennzeichnet ist, wobei der erste (17) und der zweite Kolben (35) mittels eines gemeinsamen Stiels (15) translatorisch miteinander integriert sind, wobei:
- die erste Zylinder-Kolben-Gruppe (12) den Kompressor (7) des thermodynamischen Kreislaufs (2) bildet;
- die zweite Zylinder-Kolben-Gruppe (13) den Motor (5) des thermodynamischen Kreislaufs (2) bildet;
- der Verdampfer (4) einen ersten Wärmetauscher (46) umfasst, der dazu konfiguriert ist, das Arbeitsfluid des thermodynamischen Kreislaufs (2) in eine Wärmeaustauschbeziehung mit einem ersten heißen Wärmeträgerfluid zu versetzen, das sich in einer Wärmeaustauschbeziehung mit einer heißen Wärmequelle befindet;
- der Kondensator (6) einen zweiten Wärmetauscher (51) umfasst, der dazu konfiguriert ist, das Arbeitsfluid des thermodynamischen Kreislaufs (2) in eine Wärmeaustauschbeziehung mit einem zweiten kalten Wärmeträgerfluid zu versetzen, das sich in einer Wärmeaustauschbeziehung mit einer kalten Wärmequelle befindet.

2. Thermodynamischer Motor (1) nach Anspruch 1, wobei der zweite Zylinder (34) der zweiten Zylinder-Kolben-Gruppe (13) eine zweite Kammer (36) begrenzt und der zweite Kolben (35) in der zweiten Kammer (36) zwischen einer ersten Position und einer zweiten Position translatorisch beweglich ist und die zweite Kammer (36) in einen ersten (36a) und einen zweiten (36b) Abschnitt der zweiten Kammer teilt.

3. Thermodynamischer Motor (1) nach Anspruch 2, wobei die zweite Zylinder-Kolben-Gruppe (13) einen Einlass (37) und einen Auslass (38) für das Arbeitsfluid umfasst, wobei ein Paar Einlassventile (39a, 39b) dem Einlass (37) zugeordnet ist und ein Paar Auslassventile (40a, 40b) dem Auslass (38) zugeordnet ist, wobei das Paar Einlassventile (39a, 39b) ein erstes Einlassventil (39a) umfasst, das an dem ersten Abschnitt (36a) der zweiten Kammer angeordnet ist, und ein zweites Einlassventil (39b) umfasst, das an dem zweiten Abschnitt (36b) der zweiten Kammer angeordnet ist, und wobei das Paar von Auslassventilen (40) ein erstes Auslassventil (40a) umfasst, das an einem ersten Abschnitt (36a) der zweiten Kammer angeordnet ist, und ein zweites Auslassventil (40b) umfasst, das an dem zweiten Abschnitt (36b) der zweiten Kammer angeordnet ist, so konfiguriert, dass:
- wenn das erste Einlassventil (39a) geöffnet ist, das zweite Einlassventil (39b) geschlossen ist, und umgekehrt;
- wenn das erste Auslassventil (40a) geöffnet ist, das zweite Auslassventil (40b) geschlossen ist.

4. Thermodynamischer Motor (1) nach Anspruch 3, wobei das erste Einlassventil (39a) durch eine oder mehrere Übertragungsstangen (41) mit dem zweiten Einlassventil (39b) verbunden ist und das erste Auslassventil (40a) durch eine oder mehrere weitere Übertragungsstangen (42) mit dem zweiten Auslassventil (40b) verbunden ist.

5. Thermodynamischer Motor (1) nach Anspruch 3 oder 4, wobei der zweite Kolben (35) dazu konfiguriert ist, das Öffnen/Schließen der Paare von Einlassventilen (39a, 39b) und Auslassventilen (40a, 40b) zu bewirken, wenn die erste und die zweite Position innerhalb der zweiten Kammer (36) erreicht sind.

6. Thermodynamischer Motor (1) nach Anspruch 5, wobei der zweite Kolben (35) dazu konfiguriert ist, mit den Paaren von Einlassventilen (39a, 39b) und Auslassventilen (40a, 40b) in Wechselwirkung zu treten, so dass, wenn sich der zweite Kolben (35) in die erste Position bewegt, das erste Einlassventil (39a) geöffnet ist und das erste Auslassventil (40a) geschlossen ist, und wenn sich der zweite Kolben (35) in die zweite Position bewegt, das zweite Einlassventil (39b) geöffnet und das zweite Auslassventil (40b) geschlossen ist.

7. Thermodynamischer Motor (1) nach einem der vorhergehenden Ansprüche, wobei der erste (17) und der zweite Kolben (35) der ersten (12) und zweiten Zylinder-Kolben-Gruppe (13) doppeltwirkende Kolben mit einer linearen Hin- und Herbewegung implementieren.

8. Thermodynamischer Motor (1) nach einem der vorhergehenden Ansprüche, wobei die erste Zylinder-Kolben-Gruppe (12) einen Einlass (21) und einen Auslass (22) für das Arbeitsfluid und Einwegventile (23a, 23b, 24a, 24b) umfasst, die dem Einlass (21) und dem Auslass (22) zugeordnet sind.

## Revendications

1. Moteur thermodynamique (1) comprenant :
- un circuit thermodynamique (2) comprenant un fluide de travail, ledit circuit thermodynamique (2) comprenant un évaporateur (4), un moteur (5), un condenseur (6) et un compresseur (7), dans lequel le fluide de travail circule dans la séquence évaporateur (4) - moteur (5) - condenseur (6) - compresseur (7) ;
- un premier groupe cylindre-piston (12) comportant un premier cylindre (16) et un premier piston (17), le moteur thermodynamique (1) étant **caractérisé par** un second groupe cylindre-piston (13) comportant un second cylindre (34) et un second piston (35), dans lequel lesdits premier (17) et second pistons (35) sont solidaires en translation l'un par rapport à l'autre au moyen d'une tige (15) commune, dans lequel :
- ledit premier groupe cylindre-piston (12) constitue ledit compresseur (7) du circuit thermodynamique (2) ;
- ledit second groupe cylindre-piston (13) constitue ledit moteur (5) du circuit thermodynamique (2) ;
- ledit évaporateur (4) comprend un premier échangeur thermique (46) conçu pour mettre en relation d'échange thermique ledit fluide de travail du circuit thermodynamique (2) avec un premier fluide caloporteur chaud, lequel est en relation d'échange thermique avec une source thermique chaude ;
- ledit condenseur (6) comprend un second échangeur thermique (51) conçu pour mettre en relation d'échange thermique ledit fluide de travail du circuit thermodynamique (2) avec un second fluide caloporteur froid, lequel est en relation d'échange thermique avec une source thermique froide.

2. Moteur thermodynamique (1) selon la revendication 1, dans lequel ledit second cylindre (34) du second groupe cylindre-piston (13) délimite une seconde chambre (36), et ledit second piston (35) est mobile en translation à l'intérieur de ladite seconde chambre (36) entre une première position et une seconde position, et divise ladite seconde chambre (36) en une première (36a) et une seconde (36b) partie de la seconde chambre.

3. Moteur thermodynamique (1) selon la revendication 2, dans lequel ledit second groupe cylindre-piston (13) comprend une entrée (37) et une sortie (38) pour le fluide de travail, une paire de soupapes d'admission (39a, 39b) associées à l'entrée (37) et une paire de soupapes de décharge (40a, 40b) associées à la sortie (38), dans lequel la paire de soupapes d'admission (39a, 39b) comprend une première soupape d'admission (39a) disposée au niveau de la première partie (36a) de la seconde chambre, et une seconde soupape d'admission (39b) disposée au niveau de la seconde partie (36b) de la seconde chambre, et la paire de soupapes de décharge (40) comprend une première soupape de décharge (40a) disposée au niveau de la première partie (36a) de la seconde chambre et une seconde soupape de décharge (40b) disposée au niveau de la seconde partie (36b) de la seconde chambre, conçues de telle sorte que :
- lorsque la première soupape d'admission (39a) est ouverte, la seconde soupape d'admission (39b) est fermée, et vice versa ;
- lorsque la première soupape de décharge (40a) est ouverte, la seconde soupape de décharge (40b) est fermée.

4. Moteur thermodynamique (1) selon la revendication 3, dans lequel la première soupape d'admission (39a) est reliée à la seconde soupape d'admission (39b) par au moins une barre de transmission (41), et la première soupape de décharge (40a) est reliée à la seconde soupape de décharge (40b) par au moins une autres barre de transmission (42).

5. Moteur thermodynamique (1) selon la revendication 3 ou 4, dans lequel ledit second piston (35) est conçu pour commander l'ouverture / la fermeture desdites paires de soupapes d'admission (39a, 39b) et de soupapes de décharge (40a, 40b) lorsque lesdites première et seconde positions à l'intérieur de la seconde chambre (36) sont atteintes.

6. Moteur thermodynamique (1) selon la revendication 5, dans lequel ledit second piston (35) est conçu pour interagir avec lesdites paires de soupapes d'admission (39a, 39b) et de soupapes de décharge (40a, 40b) de telle sorte que, lorsque le second piston (35) se déplace vers la première position, la première soupape d'admission (39a) est ouverte et la première soupape de décharge (40a) est fermée, et lorsque le second piston (35) se déplace vers la second position, la seconde soupape d'admission (39b) est ouverte et la seconde soupape de décharge (40b) est fermée.

7. Moteur thermodynamique (1) selon l'une quelconque des revendications précédentes, dans lequel lesdits premier (17) et second pistons (35) des premier (12) et second groupes cylindre-piston (13) mettent en oeuvre des pistons à double effet présentant un mouvement de va-et-vient linéaire.

8. Moteur thermodynamique (1) selon l'une quelconque des revendications précédentes, dans lequel ledit premier groupe cylindre-piston (12) comprend une entrée (21) et une sortie (22) pour le fluide de travail, et des soupapes (23a, 23b, 24a, 24b) unidirectionnelles associées auxdites entrée (21) et sortie (22).
